Europäisches Patentamt

European Patent Office

Office européen des brevets

(19)

(11) Publication number: **0 069 712**

**A1**

(12)

# EUROPEAN PATENT APPLICATION

(21) Application number: **82830195.2**

(22) Date of filing: **05.07.82**

(51) Int. Cl.³: **F 16 L 47/06**

(30) Priority: **06.07.81 IT 2276181**

(43) Date of publication of application:
**12.01.83 Bulletin 83/2**

(84) Designated Contracting States:
**AT CH DE FR GB LI**

(71) Applicant: **DALMINE S.p.A.**
**Via Brera, 19**
**Milano(IT)**

(72) Inventor: **Graziano, Giuseppe**
**Viale delle Rimembranze 21**
**Saronno(IT)**

(74) Representative: **Adorno, Silvano et al,**
**c/o SOCIETA' ITALIANA BREVETTI S.p.A. Via Carducci, 8**
**I-20123 Milano(IT)**

(54) Fluid-tight joint for pipes of synthetic resins, in particular of large diameter.

(57) This joint comprises a collar of stiff material with two expansions which are symmetrical to a middle transverse plane (y-y) thereof. A seal packing (24) of an elastomeric material such as rubber, is housed in each expansion zone or socket and is provided with at least two lips (25) of the same material which are directed inwardly, from opposite sides corresponding to the two pipes (1) to be joined, toward said middle plane. Associate with this plane the collar preferably shows a recess (22) which at either side forms a stop abutment for the two pipes within the collar. There is also preferably provided means to prevent the detachment of the seals from their seats.

FIG. 3

EP 0 069 712 A1

"FLUID-TIGHT JOINT FOR PIPES OF SYNTHETIC RESINS, IN
PARTICULAR OF LARGE DIAMETER"


The present invention is directed to a fluid-tight joint for pipes of synthetic resins, suitable for conveying fluids, in particular polyethylene pipes of large diameter to be laid underground.

It is known that synthetic resins are increasingly used in manufacturing pipes designed to be laid underground, especially polyolefins such as polypropylene but preferably polyethylene. According to the various kinds of use, the pipe may be provided for conveying either pressurized fluids or low-pressure waste fluids, i.e. with a drain-type flow.

It is also known that the fluid weighing onto the lower portion of the pipe, in drain pipings under atmospheric pressure, causes plastic deformations due to the low rigidity of these materials, which advise against the adoption of mechanical joints with O-rings. In fact no good seal could be obtained, and on the other hand with this type of materials it is difficult to employ adhesives.

With polyethylene pipes having a diameter of up to 120-200 mm, metal couplings have been employed which are provided with ring nuts thus rendering possible the use of O-rings in this case, notwithstanding the relatively high costs of this type of coupling. With pipes having still larger diameters, use was hitherto made of autogenous welding which is extremely expensive both for the necessary specialized personnel and for the long time required, in addition to the encumbering, costly apparatuses which are difficult to move in the narrow passages where pipings are laid.

It is the object of the present invention to provide an economical, simple joint which can be easily installed with a good seal on pipes of polyolefin-type plastic materials, in particular polyethylene, having a large diameter and designed to be mainly employed with waste fluids, in any case not under pressure.

The joint according to the invention is essentially comprised of a collar in a stiff material with two zones of expanded cross-section which are symmetrical to a middle transverse plane, in each of which a seal of elastomeric material is housed with at least two inwardly protruding lips.

According to a particular aspect of the invention, the collar has in the zone of said middle transverse plane a sensible recess capable of forming at either side a stop abutment for the two pipes to be joined.

The joint according to the invention will be better understood by means of the following detailed description of a preferred embodiment thereof, with reference to the drawings, in which:

FIGURE 1 is a perspective view of a joint according to the invention applied for two contiguous pipe sections;

FIGURE 2 is a cross-sectional view, taken along line A-A, of the joint of the invention only, without seal; and

FIGURE 3 is again ·a cross-sectional view, taken along line A-B of Fig. 1, of one half junction with the joint and its seal as well as the associate pipe end to be joined.

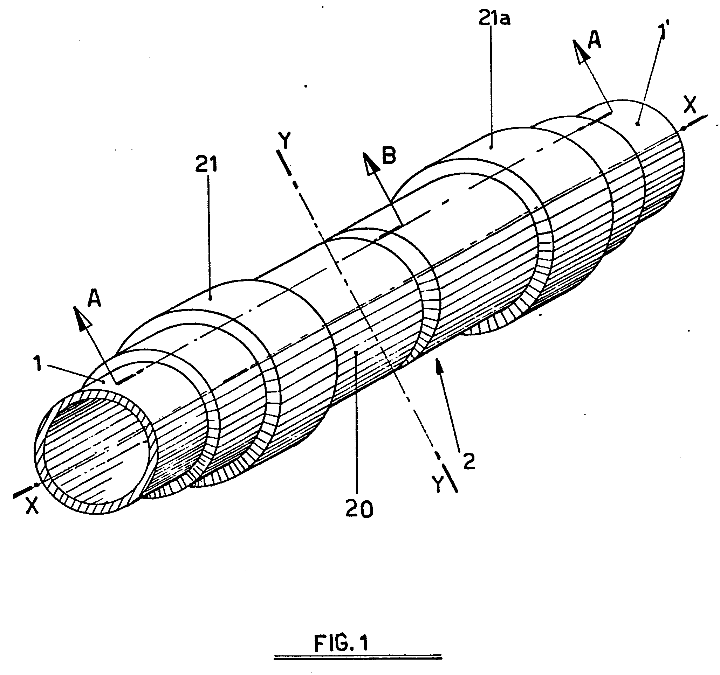

With reference to the drawings, two pipes 1, 1' of a plastic material having a slow stiffness value, such as polyolefin, in particular polyethylene, are caused to abut by means of a joint 2 according to the invention, which is comprised of a collar 20 enclosing the ends of the two pipes 1, 1' (Fig. 1).

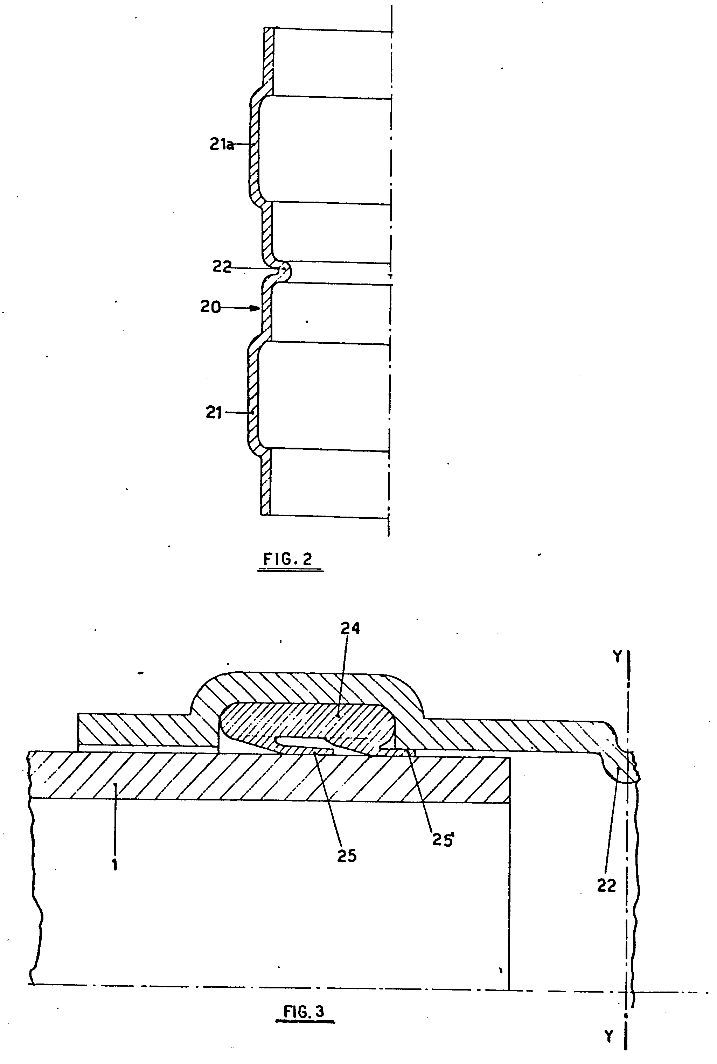

Collar 20, made of a material having higher stiffness than pipes 1, 1', has two symmetrical expansions 21, 21a of the cross-section, respectively associate with pipes 1, 1', so as to form each, as shown in Fig. 3, a housing for a seal 24 of rubber or in general an elastomer, which is provided with at least two lips 25, 25'. The lips protrude to the inside and are capable of adhering on the outer surface of the pipe. There will be obviously provided means for keeping the seal 24 in its seat 21 before a pipe is introduced in the collar, such as special fits in the seat itself, use of adhesives or stiffening rings, in order that the seal will not detach itself from the upper portion of the joint due to its own weight.

Further, collar 20 preferably has in its half-length zone, a recess 22 having an inner diameter, in the most reduced cross-section, which is in any case smaller than the outer diameter of the pipe sections to be joined. An abutment is thus formed at each side of which the ends of the two pipes 1, 1' may rest.

It should be realized that thus the joint 2 according to the present invention distributes the pressure of the sealing means ·(gasket) on a much wider surface, substantially the whole circumference of the pipe. Plastic deformations are thereby avoided in the proximity of the ends of the pipes to be joined, which otherwise would occur when using O-rings, with the dangerous consequences on the tightness that anyone could easily see.

The use of the joint according to the invention, as it also appears from the drawings, will be described now in order to better show its simplicity. Upon formation of the collar 20 and arrangement of the two seals 24 so that detachment from the respective seat 21, 21a is prevented due to its own weight or stresses from the outside prior to the mounting, the finished collar is inserted, no matter from which of the two sides, on the free end of the pipe which is forward in an underground passage. In the other side of the joint 2 the successive pipe section is forcedly.fitted until the ends of the two pipes are positioned beyond the two expansions 21, 21a in the vicinity of the middle transverse plane Y-Y of the joint itself. The central recess 22 is advantageously provided to avoid a possible slipping of each pipe further than the central zone of the collar. The seals 24 not only ensure a good tightness with their at least two lips 25, 25' directed to the axis Y-Y, but also avoid in part that the two pipe sections slip off from the joint.

Obviously a joint of the invention, although described as particularly suitable for polyethylene large diameter pipes for the transfer of not pressurized fluids, can be conveniently employed also for pipes of smaller diameter and fluids under pressure, as well as made of different materials.

**0069712**

## C L A I M S

1. A fluid-tight joint for large diameter pipes of synthetic resins, especially polyethylene, for conveying waste fluids, which comprises a collar (20) of a stiff material with a middle transverse axis (Y-Y), characterized by the fact that said collar (20) comprises two expansions (21, 21a) which are symmetrical with respect to said axis (Y-Y) and are adapted to form each the seat of a seal (24) of an elastomeric material, the seal being provided with at least two lips (25, 25') directed inwardly and toward said axis (Y-Y).

2. The joint of claim 1, wherein said collar (20) is formed with a recess (22) in the proximity of said axis (Y-Y).

3. The joint of claim 2, wherein said recess (22) has a minimum inner diameter which is smaller than the outer diameter of the pipes to be joined.

4. The joint of claim 1, 2 or 3, wherein a means is provided to prevent said seals (24) from detachment from the respective seats (21, 21a).

5. The joint of one or more of the preceding claims, wherein said collar (20) is formed in a material of higher stiffness than the pipes to be joined.

0069712

FIG. 1

21a

22

20

21

FIG. 2

24

1

25

25'

Y

22

Y

FIG. 3

**0069712**

| | European Patent Office | **EUROPEAN SEARCH REPORT** | Application number |
|---|---|---|---|

EP 82 83 0195.2

## DOCUMENTS CONSIDERED TO BE RELEVANT

| Category | Citation of document with indication, where appropriate, of relevant passages | Relevant to claim |
|---|---|---|
| A | <u>US - A - 2 980 449</u> (DUNTON) <br> * claim 1; column 1, lines 34, 35 * <br> -- | 1-4 |
| A | <u>DE - A - 2 217 488</u> (LAUDON) <br> * page 7, line 18 to page 8, line 15; fig. 1 * <br> -- | 1-4 |
| A | <u>DE - U - 1 980 476</u> (ETERNIT) <br> -- | |
| A | <u>DE - B - 1 155 292</u> (ETERNIT) <br> -- | |
| A | <u>US - A - 3 064 983</u> (HALTERMAN) <br> ----- | |

**CLASSIFICATION OF THE APPLICATION (Int. Cl. 3)**

F 16 L 47/06

**TECHNICAL FIELDS SEARCHED (Int.Cl. 3)**

F 16 L 21/00
F 16 L 47/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

<table>
<tr><td>X</td><td colspan="3">The present search report has been drawn up for all claims</td></tr>
<tr><td>Place of search<br>Berlin</td><td>Date of completion of the search<br>08-09-1982</td><td>Examiner<br>SCHLABBACH</td></tr>
</table>

EPO Form 1503.1 06.78